# EUROPÄISCHE PATENTANMELDUNG

(11) **EP 2 702 908 A1**
(43) Veröffentlichungstag der Anmeldung: **05.03.2014**
(21) Anmeldenummer: 12405093.1
(22) Anmeldetag: 30.08.2012
(51) Int. Cl.: A47J 31/56, A47J 31/60

(54) **Vorrichtung zum Bereitstellen von Flüssigkeit für einen Getränkeautomaten und deren Verwendung**

(71) Anmelder: Jura Elektroapparate AG, 4626 Niederbuchsiten (CH)
(72) Erfinder: Reyhanloo, Shahryar, 6405 Immensee (CH)
(74) Vertreter: EGLI-EUROPEAN PATENT ATTORNEYS

(57) **Zusammenfassung**

Es wird eine Vorrichtung (100) zum Bereitstellen von Flüssigkeit für einen Getränkeautomaten (110), insbesondere für eine Kaffeemaschine oder eine Kaffeeautomaten, mit einem Wasserbehälter (10) mit mindestens einem zum Füllen des Wasserbehälter (10) mit einem Wasseranschluss (21) insbesondere mit einem Überdruck-Wasseranschluss und vorzugsweise mit einem Trinkwassernetz, ansteuerbar verbindbaren Wasserzulaufs (11), einer Steuereinrichtung (30) zum Ansteuern des ansteuerbar verbindbaren Wasserzulaufs (11) und mindestens einem Füllstandsensor (41, 42) zum Erzeugen eines Signals, welches mindestens angibt, ob oder ob nicht ein erster Füllstand von Flüssigkeit innerhalb des Wasserbehälters (10) erreicht oder überschritten ist, angegeben. Mit dem Ziel, eine einfachere Reinigung, insbesondere Entkalkung der Vorrichtung (100) zu erreichen, sieht die erfindungsgemässe Lösung vor, dass der mindestens eine Füllstandsensor (41, 42) zum Übermitteln des Signals mit der Steuereinrichtung (30) verbindbar oder verbunden ist, und dass die Steuereinrichtung (30) dazu ausgelegt ist, den Wasserzulauf (11) in Abhängigkeit von dem Signal des mindestens einen Füllstandsensors (41, 42) und mindestens einen Betriebsmodus anzusteuern.

## Beschreibung

Die Erfindung betrifft eine Vorrichtung zum Bereitstellen von Flüssigkeit für einen Getränkeautomaten, insbesondere für eine Kaffeemaschine oder einen Kaffeeautomaten, sowie die Verwendung einer solchen Vorrichtung in einer Kaffeemaschine oder einem Kaffeeautomaten.

Im Halbgastronomie- und Gastronomiebereich kommen an Getränkeautomaten, insbesondere an Kaffeemaschinen oder Kaffeeautomaten vorwiegend Vorrichtungen zum Bereitstellen von Flüssigkeit, beispielsweise Brühflüssigkeit, zum Einsatz, welche einen Wasserbehälter aufweisen, der als Pufferspeicher dient und mittels eines Wasserzulaufs direkt mit einem Wasseranschluss, insbesondere mit dem Trinkwassernetz verbunden ist bzw. intervallweise verbunden wird. Durch das Vorsehen eines derartigen intervallweise ansteuerbaren "Festwasseranschlusses" kann in dem Wasserbehälter stets frisches Wasser zur Zubereitung beispielsweise eines Kaffeegetränkes vorrätig gehalten werden, was mögliche Geschmacksbeeinträchtigungen infolge abgestandenen Wassers reduziert.

Aus der Technik bekannte Vorrichtungen zum Bereitstellen von Flüssigkeit für einen Getränkeautomaten mit einem direkt mit dem Trinkwassernetz verbindbaren Wasserbehälter sind hierbei gewöhnlicherweise mit einem Arbeitsschwimmer oder sonstigen Sensoreinrichtungen versehen, welche beim Auf- bzw. Nachfüllen des Wasserbehälters über den Festwasseranschluss beim Erreichen eines Sollwasserstandes unter Zwischenschaltung einer geeigneten Steuereinrichtung mittels eines Reed-Schalters ein Zulaufventil schliessen, das in die Strecke zwischen Wasseranschluss und Wasserzulauf eingebaut ist.

Beispielsweise ist aus der US-Patentschrift 5,063,836 eine Kaffeemaschine mit einem als Pufferspeicher ausgebildeten Wasserbehälter bekannt, welche zwei Wasserstandsensoren aufweist, die mit einer Steuereinrichtung verbunden sind. Hierbei ist das Zulaufventil zwischen dem Festwasseranschluss und dem Einlauf des Wasserbehälters, also dem Wasserzulauf, solange geöffnet, wie der unten liegende Wasserstandsensor nicht meldet, dass der Füllstand, auf dessen Höhe er innerhalb des Wasserbehälters angebracht ist, erreicht oder überschritten ist. Um zu verhindern, dass das Zulaufventil infolge eines Defektes des Wasserstandsensors oder gegebenenfalls auch einer Verschmutzung oder Verkalkung derart lange geöffnet bleibt, dass der Wasserbehälter überläuft, ist oberhalb des ersten Wasserstandsensors ein zweiter Wasserstandsensor angeordnet, der ein Schliessen des Zulaufventils durch Übermittlung eines entsprechenden Signals an die Steuereinrichtung sicherstellen soll, sobald ein Wasserfüllstand erreicht ist, auf dessen Höhe dieser zweite, oben liegende Sensor angebracht ist.

Derartige aus dem Stand der Technik bekannte Vorrichtungen weisen den Nachteil auf, dass eine Reinigung, beispielsweise in Form einer Entkalkung, nur schwer möglich ist. So ist es bei den aus dem Stand der Technik bekannten Vorrichtungen nicht möglich, eine Entkalkungsflüssigkeit bei einer vorgegebenen Konzentration bis zu einer Höhe in den Wassertank zu füllen, bei welcher eine im Wesentlichen vollständige Reinigung bzw. Entkalkung aller innerhalb des Wasserbehälters angeordneten Bauteile gewährleistet ist. Weiterhin ist es bei dem aus dem Stand der Technik bekannten Vorrichtungen nicht möglich, eine einmal hinzu gegebene Reinigungs- bzw. Entkalkungsflüssigkeit konzentriert und im Wesentlichen vollständig aus dem Wasserbehälter zu entfernen.

Der vorliegenden Erfindung liegt die Aufgabe zugrunde, eine gattungsgemässe Vorrichtung zum Bereitstellen von Flüssigkeit für einen Getränkeautomaten, insbesondere für eine Kaffeemaschine oder einen Kaffeeautomaten, dahingehend weiterzubilden, dass eine Reinigung bzw. eine Entkalkung einfacher und gründlicher möglich ist.

Diese Aufgabe wird erfindungsgemäss durch eine Vorrichtung gemäss dem unabhängigen Patentanspruch 1 gelöst.

Insbesondere wird die Aufgabe dadurch gelöst, dass eine Vorrichtung zum Bereitstellen von Flüssigkeit für einen Getränkeautomaten, insbesondere für eine Kaffeemaschine oder einen Kaffeeautomaten, mit einem Wasserbehälter mit mindestens einem zum Füllen des Wasserbehälters mit einem Wasseranschluss, insbesondere mit einem Überdruck-Wasseranschluss und vorzugsweise mit einem Trinkwassernetz, ansteuerbar verbindbaren Wasserzulauf, einer Steuereinrichtung zum Ansteuern des ansteuerbar verbindbaren Wasserzulaufs und mindestens einem Füllstandsensor zum Erzeugen eines Signals, welches mindestens angibt, ob oder ob nicht ein erster Füllstand von Flüssigkeit innerhalb des Wasserbehälters erreicht oder überschritten ist, angegeben wird, wobei der mindestens eine Füllstandsensor zum Übermitteln des Signals mit der Steuereinrichtung verbindbar oder verbunden ist, und wobei die Steuereinrichtung dazu ausgelegt ist, den Wasserzulauf in Abhängigkeit von dem Signal des mindestens einen Füllstandsensors und mindestens einem Betriebsmodus anzusteuern.

Hierdurch ergibt sich der besondere Vorteil, dass der Wasserbehälter in einem entsprechendem Betriebsmodus beispielsweise zum Abschliessen eines Reinigungs- oder Entkalkungsvorganges vor einem erneuten Befüllen vollständig geleert werden kann, wodurch für einen nachfolgenden Getränkebezug eventuell auftretende Geschmacksbeeinträchtigungen minimiert werden.

Vorteilhafte Weiterbildungen der erfindungsgemässen Vorrichtung werden im Folgenden angegeben.
So ist es beispielsweise vorgesehen, dass der mindestens eine Betriebsmodus aus mindestens zwei oder mehreren Betriebsmodi der Vorrichtung auswählbar ist. Beispielsweise kann die Vorrichtung so ausgebildet sein, dass sie mindestens wahlweise in einem Füllmodus oder einem Entleerungsmodus betrieben werden kann. In diesem Fall kann vorgesehen sein, dass der "mindestens eine Betriebsmodus" beispielsweise aus den beiden Betriebsmodi "Füllmodus" und "Entleerungsmodus" auswählbar ist, sodass der "mindestens eine Betriebsmodus" also wahlweise ein Füllmodus oder ein Entleerungsmodus der Vorrichtung ist. Ein derartiger Betriebsmodus kann manuell durch eine Bedienperson vorgewählt werden oder auch automatisch, beispielsweise durch eine Kommunikation zwischen dem Getränkeautomaten und der Steuereinrichtung, ausgewählt werden. Hierdurch ist es möglich, die Befüllung den jeweils erforderlichen Gegebenheiten anzupassen. Insbesondere ist es möglich, den Füllmodus dann auszuwählen, wenn ein normaler Getränkebezug, beispielsweise also ein Kaffeebezug, angedacht ist, und den Entleerungsmodus dann anzuwählen, wenn nach dem Abschluss einer Reinigung oder Entkalkung oder bei Ausserbetriebnahme des Gerätes der Wasserbehälter möglichst vollständig entleert werden soll, wodurch Geschmacksbeeinträchtigungen beim nachfolgenden Kaffeebezug vermieden werden.

Des Weiteren ist es vorgesehen, dass die Steuereinrichtung weiterhin dazu ausgelegt ist, im Füllmodus den Wasserzulauf mit dem Wasseranschluss zu verbinden, wenn der erste Füllstand nicht erreicht und nicht überschritten ist, und im Füllmodus eine Verbindung des Wasserzulaufs mit dem Wasseranschluss zu unterbrechen, wenn der erste Füllstand erreicht oder überschritten ist.

Hierdurch ist dann, wenn als Betriebsmodus der Füllmodus manuell oder automatisch vorgewählt wurde, gewährleistet, dass stets eine ausreichende Menge an Frischwasser für den nächsten Getränkebezug zur Verfügung steht, ohne dass der Füllstand des Wasserbehälters manuell kontrolliert werden müsste oder gegebenenfalls sogar manuell ein Überlaufen des als Puffertank ausgebildeten Wasserbehälters verhindert werden müsste.

In diesem Zusammenhang kann es weiterhin vorgesehen sein, dass die Steuereinrichtung dazu ausgelegt ist, im Entleerungsmodus eine Verbindung des Wasserzulaufs mit dem Wasseranschluss unabhängig von dem ersten Füllstand zu unterbrechen. Hierdurch ist dann, wenn automatisch oder manuell der Entleerungsmodus vorgewählt wurde, ein im Wesentlichen vollständiges Entleeren des Wasserspeichers, d. h. des Wasserbehälters möglich, ohne dass bei Unterschreiten eines Mindestwasserfüllstandes stets neues Frischwasser in den Wasserbehälter eingelassen würde.

Des Weiteren kann es vorgesehen sein, dass die Vorrichtung in mindestens drei verschiedenen Betriebsmodi betrieben werden kann, beispielsweise ausser in einem der bereits erwähnten Betriebsmodi "Füllmodus" und "Entleerungsmodus" noch zusätzlich in einem "Spülmodus". In diesem Fall kann vorgesehen sein, dass der "mindestens eine Betriebsmodus" beispielsweise aus den Betriebsmodi "Füllmodus", "Entleerungsmodus" und "Spülmodus" auswählbar ist, sodass der "mindestens eine Betriebsmodus" also wahlweise ein Füllmodus, ein Entleerungsmodus oder ein "Spülmodus" der Vorrichtung ist.

Durch Vorsehen eines derartigen Spülmodus ist es möglich, den Wasserbehälter gezielt bis zu einer beliebigen Höhe aufzufüllen, ohne dass bei Erreichen des ersten Füllstandes eine Trennung des Wasseranschlusses vom Wasserzulauf folgen würde. Hierdurch ist es insbesondere beim Reinigen oder Entkalken möglich, gezielt ohne zwischenzeitliches Nachfüllen eine grössere Spülwassermenge zum Durchspülen des Fluidsystems des Getränkeautomaten, d. h. insbesondere des Kaffeeautomaten, bereitstellen zu können. Gleichzeitig ist eine Reinigung des im Wesentlichen gesamten Innenvolumens des Wasserbehälters möglich.

In diesem Zusammenhang kann es auch vorgesehen sein, dass das Signal des mindestens einen Füllstandsensors zusätzlich angibt, ob oder ob nicht ein zweiter Füllstand von Flüssigkeit innerhalb des Wasserbehälters erreicht oder überschritten ist. Dieser zweite Füllstand bezeichnet hierbei ein grösseres Flüssigkeitsvolumen innerhalb des Wasserbehälters als der erste Füllstand. Insbesondere kann hierfür auch mindestens ein weiterer Füllstandsensor vorgesehen sein, welcher oberhalb eines ersten Füllstandsensors angeordnet ist.

Durch die zusätzliche Auswertemöglichkeit eines zweiten, höheren Füllstands kann ein Reinigungs- oder Entkalkungsvorgang in höherem Masse variiert werden, was die Reinigungs- bzw. Entkalkungsleistung verbessert.

In diesem Zusammenhang kann es vorgesehen sein, dass die Steuereinrichtung dazu ausgelegt ist, im Spülmodus den Wasserzulauf mit dem Wasseranschluss zu verbinden, wenn der zweite Füllstand nicht erreicht oder überschritten ist, und eine Verbindung des Wasserzulaufs mit dem Wasseranschluss zu unterbrechen, wenn der zweite Füllstand erreicht oder überschritten ist.

Hierdurch ist es möglich, in einem Spülmodus in automatisierter Weise ein grösseres Wasservolumen zum Spülen des Fluidsystems des Getränkeautomaten, d. h. insbesondere der Kaffeemaschine zur Verfügung stellen zu können, was durch die gründlichere Spülung mögliche Geschmacksbeeinträchtigungen beim nachfolgenden Getränkebezug weiter reduziert. Alternativ oder zusätzlich kann es vorgesehen sein, dass die Steuereinrichtung dazu ausgelegt ist, auch im Füllmodus den zweiten Füllstand auszuwerten, d. h. im Füllmodus eine Verbindung des Wasserzulaufs mit dem Wasseranschluss zu unterbrechen und gegebenenfalls ein Alarmsignal auszugeben, wenn der zweite Füllstand erreicht oder überschritten ist.

Sollte infolge einer Fehlfunktion, beispielsweise eines separat vorgesehen Füllstandsensors für den ersten Füllstand, dieser erste Füllstand im Normalbetrieb, d. h. in Füllmodus überschritten werden und der zweite Füllstand erreicht werden, so ist auf diese Weise eine Sicherheitsabschaltung des Wasserzulaufs, d. h. ein forciertes Trennen des Wasseranschlusses vom Wasserzulauf vorgesehen. Gleichzeitig kann ein Alarmsignal ausgegeben werden, beispielsweise in Form eines optischen oder akustischen Signals, wodurch der Bediener des Getränkeautomaten auf die Fehlfunktion aufmerksam gemacht wird und gegebenenfalls Abhilfe schaffen kann.

Gemäss einem weiteren Aspekt der erfindungsgemässen Lösung ist vorgesehen, dass die Vorrichtung ferner eine ansteuerbare Ablasseinrichtung, vorzugsweise eine Pumpe wie beispielsweise eine Entleerungspumpe, zum Ablassen von Flüssigkeit aus dem Wassertank aufweist.

Hierdurch ist ein vereinfachtes und durch die Ansteuerbarkeit der Ablasseinrichtung auch automatisierbares Entleeren des Wassertanks zum Abführen der Reinigungs- bzw. Entkalkungsflüssigkeit oder auch zum Spülen des Getränkeautomaten wie beispielsweise der Kaffeemaschine möglich.

In diesem Zusammenhang kann es vorgesehen sein, dass die Steuereinrichtung ferner dazu ausgelegt ist, die Ablasseinrichtung in Abhängigkeit von dem Signal des mindestens einen Füllstandsensors und dem mindestens einen Betriebsmodus kontinuierlich oder intervallweise anzusteuern.

Hierbei ist es insbesondere möglich, im Entleerungsmodus ein intervallweises Entleeren der Entkalkungsflüssigkeit in die Fluidsysteme des Getränkeautomaten, beispielsweise also die Schlauchsysteme der Kaffeemaschine, vorzunehmen, wodurch eine längere Einwirkzeit der Reinigungs- bzw. Entkalkungsflüssigkeit in diesen Fluidsystemen möglich ist und sich infolge dessen die Reinigungsleistung weiter verbessert. Ein anschliessendes Durchspülen der Fluidsysteme in einem Spülmodus, d. h. nach einem weitestgehend vollständigen Entleeren des Wasserbehälters und einem anschliessenden Auffüllen mit Frischwasser, kann dann in einem kontinuierlichen Betrieb der Ablasseinrichtung erfolgen, so dass der Getränkeautomat schneller wieder für einen folgenden Getränkebezug zur Verfügung steht.

Zusätzlich weisen bestimmte herkömmliche Vorrichtungen im Wasserbehälter einen vor dem Behälterauslass angeordneten Wasserfilter. Ein derartiger im Wasserbehälter angeordneter Wasserfilter ist in der Regel ein Wasserenthärter zum zumindest teilweisen Enthärten bzw. Deionisieren des Wassers. Durch die normalerweise zum Einsatz kommende Ionentauschertechnik erschöpft sich die Filterleistung je nach Grundkalkgehalt (Carbonathärte) des über den Wasserzulauf in den Wasserbehälter einlassbaren Frischwassers und in Abhängigkeit von der durchgelaufenen Flüssigkeitsmenge, so dass sich der wirtschaftlich sinnvolle Zeitpunkt für einen Austausch des Filters (oder eines entsprechenden Filtereinsatzes) bei herkömmlichen Vorrichtungen nur schwierig bestimmen lässt.

In diesem Zusammenhang kann es nun zusätzlich vorgesehen sein, dass der mindestens eine Füllstandssensor nicht lediglich ein Signal über ein Erreichen des Füllstandes an die Steuereinrichtung abgibt, sondern dass er zusätzlich dazu ausgelegt ist, bei einer Benetzung mit Flüssigkeit eine Behälterwasserhärte, vorzugsweise durch eine Leitfähigkeitsmessung (d.h. durch eine Messung der elektrischen Leitfähigkeit des Wassers), zu bestimmen und mittels des mindestens einen Signals an die Steuereinrichtung zu übermitteln. Die Steuereinrichtung ist hierbei ferner dazu ausgelegt, in Abhängigkeit von der Behälterwasserhärte ein Wechselintervall für einen im Wasserbehälter vorgesehenen Wasserfilter zu bestimmen und vorzugsweise bei Ablauf des bestimmten Wechselintervalls ein Filterwechselsignal auszugeben, welches einen Zeitpunkt charakterisiert, an dem der Wasserfilter oder gegebenenfalls ein Filtereinsatz des Wasserfilters vorzugsweise gewechselt werden sollte.

Durch die Messung der Wasserhärte im Wasserbehälter kann ein Wechselintervall bestimmt werden, zu welchem der Filter bzw. der Filtereinsatz für eine Aufrechterhaltung der Filterwirkung ausgetauscht werden sollte. Zu diesem Zweck können zusätzlich auch die Werte eines Durchflussmessers oder ein Zeitablauf in der Steuereinrichtung ausgewertet werden.

Hierdurch ist es in einfacher Weise möglich, zusätzlich zu den bereits genannten Vorteilen den Benutzer des Getränkeautomaten dazu zu veranlassen, einen Wasserfilterwechsel (oder den Wechsel des Filteinsatzes) zu einem wirtschaftlich sinnvollen Zeitpunkt vorzunehmen.

In diesem Zusammenhang kann es auch vorgesehen sein, dass die Vorrichtung zusätzlich einen Wasserhärtesensor an einem Auslass des Wasserbehälters aufweist, der dazu ausgelegt ist, bei einer Benetzung mit Flüssigkeit eine "Auslasswasserhärte" (d.h. die Härte des Wassers, welches nach Durchströmen des Filters den Behälter durch den Auslass verlässt), vorzugsweise durch eine Leitfähigkeitsmessung (d.h. durch eine Messung der elektrischen Leitfähigkeit des Wassers), zu bestimmen und mittels des mindestens einen Signals an die Steuereinrichtung der Vorrichtung und oder an eine andere Steuereineinrichtung, beispielsweise an eine Steuerelektronik des Getränkeautomaten, zu übermitteln. Die Steuereinrichtung der Vorrichtung oder die Steuerelektronik des Getränkeautomaten ist in diesem Fall ferner dazu ausgelegt, die jeweils gemessene Behälterwasserhärte mit der jeweils gemessenen Auslasswasserhärte zu vergleichen; zu diesem Zweck kann beispielsweise eine Differenz zwischen der gemessenen Auslasswasserhärte und der gemessenen Behälterwasserhärte oder ein Verhältnis zwischen der gemessenen Auslasswasserhärte und der gemessenen Behälterwasserhärte bestimmt werden.
Ein derartiger Vergleich zwischen der Behälterwasserhärte und der Auslasswasserhärte bietet die Möglichkeit, ein "Vergleichswechselintervall" für den im Wasserbehälter vorgesehenen Wasserfilter zu bestimmen, beispielsweise in Abhängigkeit von einem Verhältnis zwischen der Auslasswasserhärte und der Behälterwasserhärte (im Folgenden "Wasserhärtenverhältnis") oder der Differenz zwischen der Auslasswasserhärte und der Behälterwasserhärte (im Folgenden "Wasserhärtendifferenz"), und vorzugsweise bei Ablauf des bestimmten "Vergleichswechselintervalls" das Filterwechselsignal auszugeben. In diesem Zusammenhang soll "Vergleichswechselintervall" ein Zeitintervall bezeichnen, welches auf der Grundlage eines Vergleichs zwischen der Behälterwasserhärte und der Auslasswasserhärte ermittelt wurde und dessen Ende einen Zeitpunkt charakterisiert, an dem der Wasserfilter bzw. ein Filtereinsatz des Wasserfilters vorzugsweise gewechselt werden sollte.

Aus einem derartigen Vergleich zwischen der Behälterwasserhärte und der Auslasswasserhärte (z.B. durch Bestimmen des oben genannten "Wasserhärtenverhältnis" oder der oben genannten "Wasserhärtendifferenz"), kann auf den Erschöpfungsgrad des Filters geschlossen werden. Ist diese Wasserhärtendifferenz mit zunehmender Erschöpfung des Filters bzw. der Filterwirkung auf einen vorab festgelegten oder festlegbaren Wert abgesunken oder wird diese Wasserhärtendifferenz kleiner oder gleich einem vorgegebenen Wert, gibt die Steuereinrichtung der Vorrichtung oder die Steuerelektronik des Getränkeautomaten eine Information über das ermittelte Vergleichswechselintervall oder ein Filterwechselsignal an den Benutzer aus, wodurch eine noch genauere Bestimmung des wirtschaftlich sinnvollen Zeitpunktes zum Wasserfilterwechsel (oder Wechsel des Einsatzes) möglich ist. Entsprechend kann die Steuereinrichtung der Vorrichtung oder die Steuerelektronik des Getränkeautomaten eine Information über das ermittelte Vergleichswechselintervall oder ein Filterwechselsignal an den Benutzer ausgeben, wenn das ermittelte Wasserhärtenverhältnis auf einen vorgegebenen Wert anwächst oder einen vorgegebenen Wert übersteigt.

Unter Verwendung der erfindungsgemässen Vorrichtung kann auch ein automatisiertes Reinigungs- bzw. Entkalkungsverfahren vorgesehen sein, welches von der Steuereinrichtung ausgeführt wird und die folgenden Schritte aufweist:
- Aktivieren des Füllmodus und Befüllen des Wassertanks bis zu einem ersten Füllstand;
- Zugeben von Reinigungsmittel, vorzugsweise Entkalkungsmittel, in den Wassertank;
- Aktivieren des Entleerungsmodus und Entleeren des Wassertanks;
- Aktivieren des Spülmodus und Befüllen des Wassertanks bis zum zweiten Füllstand;
- Aktivieren des Entleerungsmodus und Entleeren des Wassertanks ;
- Aktivieren des Füllmodus und Befüllen des Wassertanks bis zum ersten Füllstand;
- Aktivieren des Entleerungsmodus und Entleeren, vorzugsweise intervallweises Entleeren, des Wassertanks.

Nachfolgend wird ein Ausführungsbeispiel der Erfindung anhand einer Zeichnung näher erläutert.

Es zeigen:
- Fig. 1:: in schematischer Schnittansicht eine erfindungsgemässe Vorrichtung zum Bereitstellen von Flüssigkeit gemäss einem Ausführungsbeispiel;
- Fig. 2:: den mit A gekennzeichneten Ausschnitt aus Fig. 1;
- Fig. 3:: in schematischer Schnittansicht eine erfindungsgemässe Vorrichtung zum Bereitstellen von Flüssigkeit gemäss einem weiteren Ausführungsbeispiel.

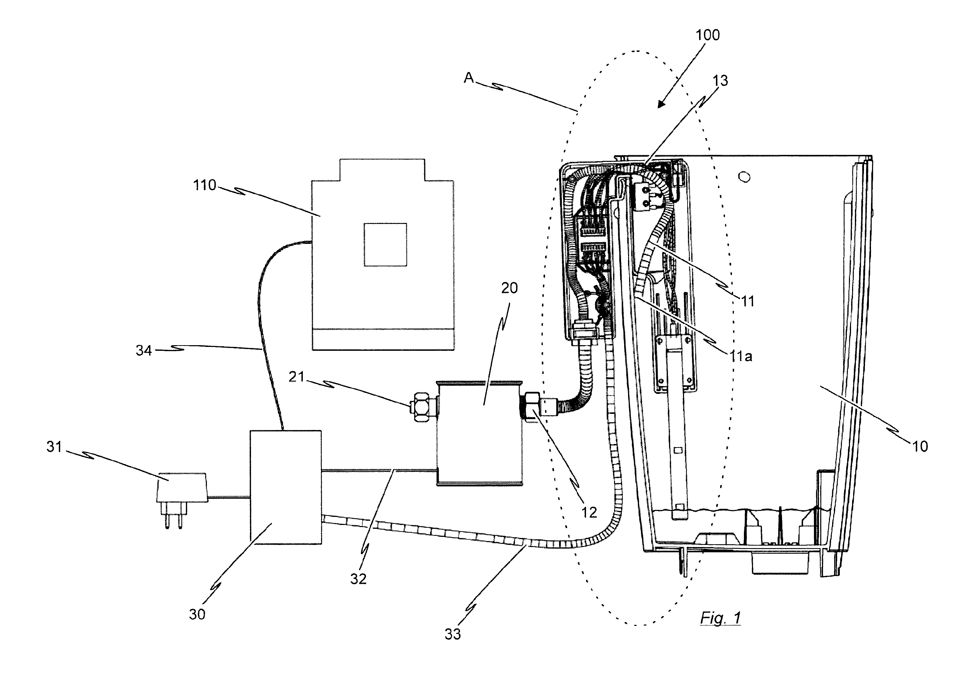

Fig. 1 zeigt in einer schematischen Schnittansicht eine erfindungsgemässe Vorrichtung 100 zum Bereitstellen von Flüssigkeit für einen Getränkeautomaten 110, insbesondere für eine Kaffeemaschine oder einen Kaffeeautomaten, gemäss einer Ausführungsform der Erfindung.

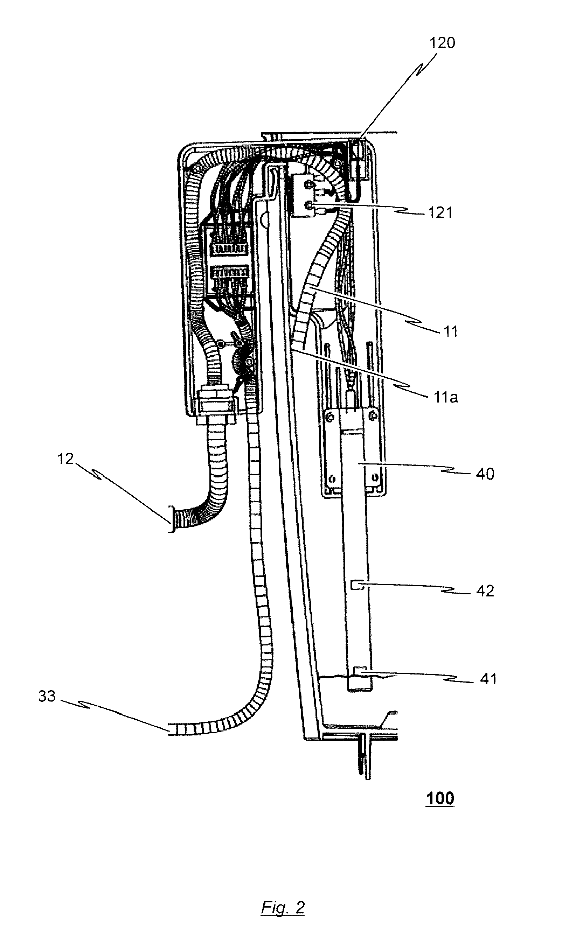

Die Vorrichtung 100 weist einen Wasserbehälter 10 auf, in welchen in Fig. 1 linksseitig gezeigt ein sogenannter Festwasserclip 13 eingehängt ist, welcher weiter unten stehend unter Bezugnahme auf Fig. 2 noch näher erläutert wird.

Ein Wasserzulauf 11 ist durch das Gehäuseinnere des Festwasserclips 13 geführt und ragt mit seiner Einlassöffnung 11a in das Innere des Wasserbehälters 10. Der Schlauch des Wasserzulaufs 11 ist aussenseitig mit einem Ventilanschluss 12 versehen, welcher seinerseits wiederum mit einer Seite eines Servomagnetventils 20 verbunden ist.

Das Servomagnetventil 20 ist ansteuerbar ausgebildet und derart ausgelegt, dass es bei Vorhandensein geeigneter Signale auf seiner Ansteuerleitung 32 eine (Fluid-) Verbindung mit einem Wasseranschluss 21, welcher beispielsweise direkt an das Trinkwassernetz angeschlossen ist, herstellen und trennen bzw. unterbrechen kann. Selbstverständlich kann das Servomagnetventil 20 auch durch ein Ventil anderer Bauart ersetzt werden.

Die Ansteuerleitung 32 ist mit einer Steuereinrichtung 30 verbunden, welche beispielsweise in Form eines Minihubs als zentrale Schnittstelle ausgebildet sein kann.

Die Steuereinrichtung 30 weist ferner eine Statusleitung 34 zu dem Getränkeautomaten 110 auf, was es besonders einfach macht, an einer (normalerweise ohnehin vorhandenen) Benutzerschnittstelle des Getränkeautomaten 110 (zum Bedienen des Getränkeautomaten 110 durch einen Benutzer) eine manuelle Auswahlmöglichkeit für den Betriebsmodus vorzusehen. Ein entsprechendes Signal, welches den Betriebsmodus kennzeichnet, kann dann von dem Getränkeautomaten 110 über die Statusleitung 34 an die Steuereinrichtung 30 übertragen werden.

Die Steuereinrichtung 30 ist weiterhin mit einer Signalleitung 33 verbunden, welche zumindest in Teilen durch das Gehäuse des Festwasserclips 13 zu einem ersten Füllstandsensor 41 und einem zweiten Füllstandsensor 42, die an einer Sensorlanze 40 angeordnet sind, führt und eine elektrische Signalverbindung mit den Füllstandsensoren 41, 42 herstellt. Sensorlanze 40, erster Füllstandsensor 41 sowie zweiter Füllstandsensor 42 sind in der vergrösserten Darstellung des Festwasserclips 13 in Fig. 2 zu erkennen.

Ferner werden über die Signalleitung 33 zusätzlich Informationen an die Steuereinrichtung 30 übertragen, die kennzeichnen, ob der Festwasserclip 13 ordnungsgemäss auf den Wasserbehälter 10 gesteckt wurde. Hierzu weist der Festwasserclip 13 einen Detektionsschalter 121 auf, der ein entsprechendes Signal an die Steuereinrichtung 30 übermittelt. Für den Fall, dass der Festwasserclip 13 nicht ordnungsgemäss an dem Wasserbehälter 10 montiert wurde, ist vorgesehen, dass die Steuereinrichtung 30 ein Befüllen des Wasserbehälters 10, d. h. ein Öffnen des Servomagnetventils 20, verhindert. Gleichzeitig wird ein optisches Signal an den Bediener ausgegeben, indem die Steuereinrichtung 30 über die Signalleitung 33 eine LED 120 aktiviert.

Der erste Füllstandsensor 41 ist auf einem ersten Wasserfüllstandsniveau angeordnet und gibt ein entsprechendes Signal über die Signalleitung 33 an die Steuereinrichtung 30 aus, wenn er von Flüssigkeit benetzt ist, d. h. sobald der ihm zugeordnete Füllstand innerhalb des Wasserbehälters 10 erreicht oder überschritten wird. In entsprechender Weise übermittelt der darüberliegend angeordnete zweite Füllstandsensor 42 ebenfalls ein Signal über die Signalleitung 33 an die Steuereinrichtung 30, sobald ein zweiter Füllstand, d. h. ein höherer Füllstand innerhalb des Wasserbehälters 10 erreicht oder überschritten wird.

Die Sensorlanze 40 ist mittels einer geeigneten Verstelleinrichtung höhenverstellbar angeordnet und erlaubt somit in gewissen Grenzen eine Justage der Füllstände des ersten Füllstandsensors 41 und des zweiten Füllstandsensors 42.

Während eines Produktbezuges sowie im laufenden Betrieb des Getränkeautomaten, d. h. in einem Füllmodus des Getränkeautomaten wie beispielsweise der Kaffeemaschine, steuert die Steuereinrichtung 30 das Servomagnetventil 20 derart an, dass stets ein intervallmässiges Nachfüllen auf das Wasserniveau, welches der erste Füllstandsensor 41 angibt - den sogenannten Operationspunkt - erfolgt. Sinkt der Wasserstand im Wasserbehälter 10 unter diesen ersten Füllstand, so übermittelt der erste Füllstandsensor 41 über die Signalleitung 33 an die Steuereinrichtung 30 ein derartiges Absinken des Wasserstandes, woraufhin die Steuereinrichtung 30 das Servomagnetventil 20 öffnet und somit eine Verbindung zwischen dem Wasserzulauf 11 und dem Wasseranschluss 21 herstellt, bis der Sensor bei Erreichen des ersten Füllstandes wieder ein entsprechendes Signal liefert, woraufhin das Servomagnetventil 20 wieder geschlossen wird.

Beide Füllstandsensoren 41, 42 sind hierbei nicht auf ein bestimmtes Messverfahren beschränkt; gleichwohl wird vorzugsweise der Widerstand zwischen zwei elektrisch leitenden Messflächen, die bündig an dem runden Messstab der Sensorlanze 40 angeordnet sind, gemessen, in dem der Signalsprung von der Leitfähigkeit des Wassers und der Luft von der Elektronik der Steuereinrichtung 30 bzw. einer in die Füllstandsensoren 41, 42 integrierten Elektronik ausgewertet wird. Besonderer Vorteil hier ist, dass diese Sensorvariante leicht mit herkömmlichen Reinigungsmitteln von allfälligen Kalkrückständen gereinigt werden kann.

Je nach Betriebsmodus erfolgt nun eine Ansteuerung durch die Steuereinrichtung 30 dahingehend, dass entweder ein Befüllen des Wasserbehälters 10 bis Erreichen des ersten Füllstandes beim ersten Füllstandsensor 41, beim Erreichen des zweiten Füllstandes beim zweiten Füllstandsensor 42 oder aber gar kein Nachfüllen vorgenommen wird.

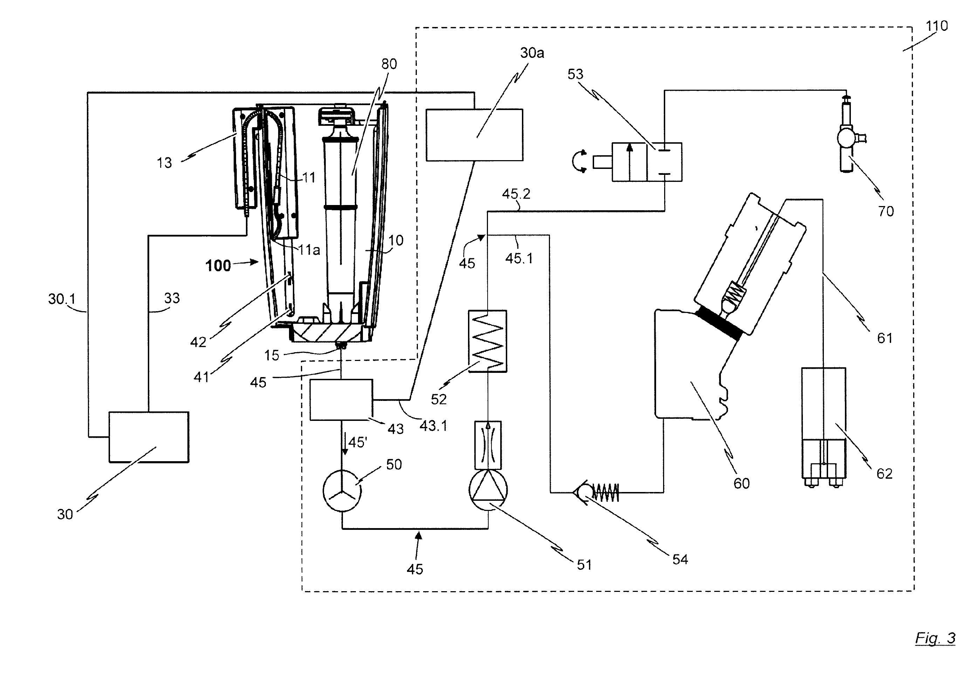

Zum Zwecke der kontrollierten Entleerung des Wasserbehälters 10 kann die Vorrichtung 100 gemäss der in den Figuren 1 und 2 dargestellten Ausführungsform der Erfindung mit einer in den Figuren 1 und 2 nicht dargestellte Entleerungspumpe ausgestattet sein, welche derart ansteuerbar ist, dass sie kontinuierlich oder intervallweise Flüssigkeit aus dem Wasserbehälter abpumpen kann, beispielsweise in eine (in Fig. 1 und 2 nicht dargestellte) Restwasserschale. Zu diesem Zweck kann die Entleerungspumpe beispielsweise ein Bestandteil der Vorrichtung 100 sein oder an der Vorrichtung 100 angeordnet sein und beispielsweise durch die Steuereinrichtung 30 angesteuert werden. Alternativ kann als eine derartige Entleerungspumpe auch eine Pumpe dienen, welche in den Getränkeautomaten 110 integriert ist und dafür bestimmt ist, Wasser in einem (in Fig. 1 und 2 nicht dargestellten, aber in Fig. 3 dargestellten und im Zusammenhang mit Fig. 3 beschriebenen) Fluidsystem des Getränkeautomaten 110 (zur Versorgung des Getränkeautomaten 110 mit Wasser) zu transportieren. Diese Pumpe des _Getränkeautomaten 110 kann dementsprechend von einer (in Fig. 3 dargestellten) Steuerelektronik 30a des Getränkeautomaten 110 gesteuert werden und so mit dem Behälter 10 verbunden werden, dass mit dieser Pumpe Wasser aus dem Behälter 10 abgepumpt werden kann, beispielsweise in einen (in den Fig. 1-3 nicht gezeigten) Wasserablauf, beispielsweise in eine Restwasserschale des Getränkeautomaten 110. Hierbei kann es zusätzlich auch vorgesehen sein, dass eine derartige Entleerungspumpe mit einem Durchflussmesser 50 (Fig. 3) in dem Getränkeautoamten 110 verbunden ist, so dass zusätzlich eine Überwachung dahingehend möglich ist, zu welchem Zeitpunkt der Wasserbehälter 10 im Wesentlichen vollständig entleert wurde.

Durch den Aufbau gemäss der dargestellten Ausführungsform ist beispielsweise ein weitgehend automatisiertes Entkalken des Wasserbehälters 10 möglich. Hierzu ist es lediglich erforderlich, in das in dem Wasserbehälter 10 vorhandene Wasser eine definierte Menge Entkalkungsmittelkonzentrat einzufüllen und beispielsweise nach einer Tastenbetätigung an dem Getränkeautomaten 110 den Betriebsmodus der Vorrichtung 100 zu wechseln und einen automatisch ablaufenden Entkalkungsvorgang zu starten.

Während dieses Entkalkungsvorgangs wird die Zugabe von Frischwasser gezielt unterbunden, indem das Servomagnetventil 20 durch die Steuereinrichtung 30 stets so angesteuert wird, dass keine Verbindung zwischen dem Wasserzulauf 11 und dem Wasseranschluss 21 besteht. Nachdem die Entleerungspumpe den Wasserbehälter 1.0 im Wesentlichen vollständig geleert hat, wird die Frischwasserzugabe bis zu einer Wasserhöhe freigegeben, welche der Anordnung des zweiten Füllstandsensors 42 entspricht. Diese Wassermenge wird zuerst mittels der Entleerungspumpe in ein entsprechendes Abflusssystem, beispielsweise eine Restwasserschale geleitet, wodurch der Wassertank gespült wird. Danach wird die Frischwasserzugabe bis zur Wasserhöhe freigegeben, welche der Anordnung des ersten Füllstandsensors 41 entspricht. Mit diesem Frischwasser wird dann das komplette Fluidsystem des Getränkeautomaten, also beispielsweise der Kaffeemaschine, ausgespült.

Selbstverständlich ist es möglich, die komplette Vorrichtung 100 zum Bereitstellen von Flüssigkeit oder auch nur Teile davon, wie beispielsweise den Wasserbehälter 10 in den Getränkeautomaten 110 zu integrieren und somit einen Getränkeautomaten 110, insbesondere eine Kaffeemaschine mit der erfindungsgemässen Vorrichtung 100 bereitzustellen, bei welchem bzw. bei welcher nur der Wasseranschluss 21 der Vorrichtung 100 und gegebenenfalls eine separate Spannungsversorgung 31 nach aussen geführt sind.

Fig. 3 zeigt in schematischer Schnittansicht eine erfindungsgemässe Vorrichtung zum Bereitstellen von Flüssigkeit gemäss einem weiteren Ausführungsbeispiel. Das Ausführungsbeispiel gemäss Fig. 3 umfasst u.a. die Vorrichtung 100 gemäss Fig. 1 und 2 mit einem Wasserbehälter 10 und ist in Kombination mit einen Getränkeautomaten 110 gemäss Fig. 1 dargestellt, welcher im vorliegenden Fall als Kaffeemaschine bzw. Kaffeeautomat ausgebildet ist.

Es ist anzumerken, dass ein in Fig. 1 und 2 dargestellter Wasserzulauf zum Zuführen von Wasser in den Behälter 10 (über einen Wasseranschluss 21 und ein ansteuerbar ausgebildetes Servomagnetventil 20) zwar in Fig. 3 nicht explizit dargestellt ist, im Falle des Ausführungsbeispiels gemäss Fig. 3 aber ein entsprechender Wasserzulauf zum Zuführen von Wasser in den Wasserbehälter 10 jedoch vorhanden ist und im Wesentlichen (hinsichtlich seiner Funktion und seiner Konstruktion) analog zu dem in Fig. 1 dargestellten Wasserzulauf ausgebildet ist. Dementsprechend ist gemäss Fig. 3 in den Wasserbehälter 10 der Vorrichtung 100 ein Festwasserclip 13 eingehängt, welcher dem Festwasserclip 13 gemäss Fig. 2 entspricht.

Wie in Fig. 3 dargestellt ist, weist der Behälter 10 einen Auslass 15 aus, durch welchen (Frisch-) Wasser oder eine andere Flüssigkeit aus dem Behälter 10 abgegeben werden kann, wobei im Behälter 10 am Auslass 15 ein Filter 80 platziert ist, durch welchen das im Behälter 10 befindliche Wasser bzw. die jeweilige Flüssigkeit jeweils fliessen muss, um zum Auslass 15 zu gelangen. Im dargestellten Ausführungsbeispiel weist er Filter 80 einen Filtereinsatz in Form eines Ionentauschers auf, welcher dazu ausgebildet ist, zumindest einen Teil des durch den Filter 80 fliessenden Wassers bzw. der durch den Filter 80 fliessenden Flüssigkeit zu deionisieren und auf diese Weise zu entkalken.

Wie Fig. 3 andeutet, umfasst der Getränkeautomat 110 eine Wasserleitung 45, welche an einem Ende an den Auslass 15 angeschlossen ist, sodass Wasser oder eine andere Flüssigkeit aus dem Behälter 10 in die Wasserleitung 45 fliessen und durch die Wasserleitung 45 im Getränkeautomaten 110 verteilt werden kann. In die Wasserleitung 45 sind - in der Flussrichtung 45' des Wassers bzw. der jeweiligen Flüssigkeit seriell hintereinander angeordnet - eine Pumpe 51 zum Transportieren des Wassers in der Wasserleitung 45 in der Flussrichtung 45' und ein Durchlauferhitzer 52 integriert. Der Durchlauferhitzer 52 ist dazu ausgelegt, das mittels der Pumpe 51 zum Durchlauferhitzer 52 transportierte Wasser zu erhitzen, wobei der Durchlauferhitzer 52 das Wasser auf verschiedene Temperaturen erhitzen kann, sodass der Durchlauferhitzer 52 wahlweise Heisswasser oder Wasserdampf in der Wasserleitung 45 erzeugt. Wie Fig. 3 weiterhin andeutet, ist die Wasserleitung 45 - bezogen auf die Flussrichtung 45' des Wassers - hinter dem Durchlauferhitzer 52 verzweigt in einen ersten Zweig 45.1 der Wasserleitung 45 und einen zweiten Zweig 45.2 der Wasserleitung 45, wobei der erste Zweig 45.1 der Wasserleitung 45 dazu dient, im Durchlauferhitzer 52 erzeugtes Heisswasser über ein Rückschlagventil 54 einer Brüheinheit 60 zum Brühen von Kaffee zuführen, und der zweite Zweig 45.2 der Wasserleitung 45 dazu dient, im Durchlauferhitzer 52 erzeugten Wasserdampf über ein Stellventil 53 einer Dampfdüse 70 zuzuführen.

Wie aus Fig. 3 weiterhin ersichtlich, umfasst der Getränkeautomat 110 eine Steuerelektronik 30a zur Steuerung eines Betriebs des Getränkeautomats 110. Dabei ist die Steuerelektronik 30a beispielsweise dazu ausgebildet, durch eine entsprechende Ansteuerung der Pumpe 51, des Durchlauferhitzers 52, des Stellventils 53 und der Brüheinheit 60 zu veranlassen, dass Heisswasser der Brüheinheit 60 zugeführt wird, sodass die Brüheinheit 60 ein Kaffeegetränk brühen und dieses Kaffeegetränk über eine Kaffeeausgabeleitung 61 einem Kaffeeauslass 62 zur Abgabe des Kaffeegetränks zuführen kann.

Die Steuerelektronik 30a ist auch dazu ausgebildet, durch eine entsprechende Ansteuerung der Pumpe 51, des Durchlauferhitzers 52 und des Stellventils 53 zu veranlassen, dass eine Portion Wasserdampf der Dampfdüse 70 zugeführt wird, wobei die Dampfdüse 70 beispielsweise dazu ausgebildet sein kann, den Wasserdampf aus einer Austrittsöffnung austreten zu lassen, oder dazu dienen kann, Milch zu erhitzen oder Milchschaum zu erzeugen.

Der erste Füllstandssensor 41 des Festwasserclips 13 ist gemäß diesem Ausführungsbeispiel zusätzlich dazu ausgelegt, bei Benetzung eine Information über den Wasserhärtegrad des im Behälter 10 befindlichen Wassers (im Folgenden "Behälterwasserhärte") zu ermitteln und an die Steuereinrichtung 30 zu übermitteln (beispielsweise über eine in Fig.3 dargestellte Signalleitung 33). Selbstverständlich ist es auch möglich, zusätzlich oder alternativ den zweiten Füllstandssensor 42 entsprechend auszulegen, so dass dieser ebenfalls eine Information über den Wasserhärtegrad des im Behälter 10 befindlichen Wassers (Behälterwasserhärte) ermitteln und an die Steuereinrichtung 30 übermitteln kann (beispielsweise über die in Fig.3 dargestellte Signalleitung 33).

Wie aus Fig. 3 ersichtlich, ist die Steuereinrichtung 30 der Vorrichtung 100 über eine Signalleitung 30.1 mit der Steuerelektronik 30a des Getränkeautomaten 110 verbunden, sodass über die Signalleitung 30.1 Signale bzw. Daten zwischen der Steuereinrichtung 30 und der Steuerelektronik 30a übertragbar sind. Die Steuerelektronik 30a ist beispielsweise dazu ausgebildet, Messwerte für die vom ersten Füllstandssensor 41 ermittelte Behälterwasserhärte und/oder für die vom zweiten Füllstandssensor 42 ermittelte Behälterwasserhärte an die Steuereinrichtung 30a des Getränkeautomaten 110 zu übermitteln.

Wie Fig. 3 andeutet, ist in der Wasserleitung 45 des Getränkeautomaten 110 in der Nähe des Auslasses 15 des Behälters 10 zusätzlich ein Wasserhärtesensor 43 platziert, welcher eine Information über den Wasserhärtegrad des am Auslass 15 ausgegebenen Wassers (im Folgenden "Auslasswasserhärte") über eine Signalleitung 43.1 an die Steuereinrichtung 30a ausgibt. Bei entsprechend hoher Behälterwasserhärte sollte dieses ausgegebene Wasser durch das Passieren des Filters 80 eine geringere Wasserhärte als das Wasser im Behälter 10 aufweisen.

Die Steuerelektronik 30a des Getränkeautomaten 110 ist nunmehr zusätzlich dazu ausgelegt, diese Informationen der Sensoren 41, 42, 43 über die Wasserhärten zu vergleichen und bei Unterschreiten einer gewissen (vorgegebenen) Differenz zwischen Auslasswasserhärte und Behälterwasserhärte ein Signal an einen Benutzer auszugeben, beispielsweise mittels einer nicht dargestellten LED oder mittels eines Bildschirms oder einer anderen Anzeige, um dem Benutzer anzuzeigen, dass der Filter 80 das durch den Filter 80 fliessende Wasser unzureichend deionisiert bzw. entkalkt und (hinsichtlich des Entkalkens) keine akzeptable Filterwirkung erzielt, sodass der Filter 80 durch einen anderen Filter ersetzt werden sollte, welcher gewährleistet, dass das Wasser vor dem Eintritt in die Wasserleitung 45 des Getränkeautomaten 110 allenfalls einen Kalkgehalt aufweist, welcher einen vorgegebenen (maximalen) Wert unterschreitet.

In Fig. 3 sind die Vorrichtung 100 und der Getränkeautomat 110 als separate Einheiten dargestellt. Es sei darauf hingewiesen, dass die Vorrichtung 100 auch ein integraler Bestandteil des Getränkeautomaten 110 sein kann. In Fig. 3 ist die Steuereinrichtung 30 der Vorrichtung 100 als eine separate, von der Steuerelektronik 30a des Getränkeautomaten 110 räumlich getrennte Einheit dargestellt. Es sei darauf hingewiesen, dass die Steuereinrichtung 30 auch als integraler Bestandteil der Steuerelektronik 30a realisiert sein kann. In diesem Fall wären der erste Füllstandssensor 41 und der zweite Füllstandssensor 42 über die Signalleitung 33 direkt mit der Steuerelektronik 30a des Getränkeautomaten 110 verbunden. Dementsprechend können alle Funktionen zur Steuerung der Vorrichtung 100, welche in der obigen Darstellung der Steuereinrichtung 30 zugeordnet sind bzw. mittels der Steuereinrichtung 30 realisierbar sind, in der Steuerelektronik 30a des Getränkeautomaten 110 implementiert sein bzw. mittels der Steuerelektronik 30a des Getränkeautomaten 110 realisierbar sein.

## Patentansprüche

1. Vorrichtung (100) zum Bereitstellen von Flüssigkeit für einen Getränkeautomaten (110), insbesondere für eine Kaffeemaschine oder einen Kaffeeautomaten, wobei die Vorrichtung (100) Folgendes aufweist:
- einen Wasserbehälter (10) mit mindestens einem Wasserzulauf (11) zum Füllen des Wasserbehälters (10), welcher Wasserzulauf (11) mit einem Wasseranschluss (21), insbesondere mit einem Überdruck-Wasseranschluss und vorzugsweise mit einem Trinkwassernetz, ansteuerbar verbindbar ist;
- eine Steuereinrichtung (30, 30a) zum Ansteuern des ansteuerbar verbindbaren Wasserzulaufs (11); und
- mindestens einen Füllstandsensor (41, 42) zum Erzeugen eines Signals, welches mindestens angibt, ob oder ob nicht ein erster Füllstand von Flüssigkeit innerhalb des Wasserbehälters (10) erreicht oder überschritten ist,
wobei der mindestens eine Füllstandsensor (41, 42) zum Übermitteln des Signals mit der Steuereinrichtung (30, 30a) verbindbar oder verbunden ist, und wobei die Steuereinrichtung (30, 30a) dazu ausgelegt ist, den Wasserzulauf (11) in Abhängigkeit von dem Signal des mindestens einen Füllstandsensors (41, 42) und mindestens einem Betriebsmodus anzusteuern.

2. Vorrichtung nach Anspruch 1, wobei der mindestens eine Betriebsmodus wahlweise ein Füllmodus oder ein Entleerungsmodus ist.

3. Vorrichtung nach Anspruch 2, wobei die Steuereinrichtung (30, 30a) weiterhin dazu ausgelegt ist, im Füllmodus den Wasserzulauf (11) mit dem Wasseranschluss (21) zu verbinden, wenn der erste Füllstand nicht erreicht und nicht überschritten ist, und wobei die Steuereinrichtung (30, 30a) weiterhin dazu ausgelegt ist, im Füllmodus eine Verbindung des Wasserzulaufs (11) mit dem Wasseranschluss (21) zu unterbrechen, wenn der erste Füllstand erreicht oder überschritten ist.

4. Vorrichtung nach Anspruch 3, wobei die Steuereinrichtung (30, 30a) weiterhin dazu ausgelegt ist, im Entleerungsmodus eine Verbindung des Wasserzulaufs (11) mit dem Wasseranschluss (21) unabhängig von dem ersten Füllstand zu unterbrechen.

5. Vorrichtung nach einem der vorhergehenden Ansprüche, wobei der mindestens eine Betriebsmodus wahlweise ein Füllmodus, ein Entleerungsmodus oder ein Spülmodus ist.

6. Vorrichtung nach einem der vorhergehenden Ansprüche, wobei das Signal des mindestens einen Füllstandsensors (41, 42) zusätzlich angibt, ob oder ob nicht ein zweiter Füllstand von Flüssigkeit innerhalb des Wasserbehälters (10) erreicht oder überschritten ist, wobei der zweite Füllstand ein grösseres Volumen bezeichnet als der erste Füllstand.

7. Vorrichtung nach Anspruch 6, wobei die Steuereinrichtung (30, 30a) dazu ausgelegt ist, im Spülmodus den Wasserzulauf (11) mit dem Wasseranschluss (21) zu verbinden, wenn der zweite Füllstand nicht erreicht und nicht überschritten ist, und wobei die Steuereinrichtung (30, 30a) weiterhin dazu ausgelegt ist, im Spülmodus eine Verbindung des Wasserzulaufs (11) mit dem Wasseranschluss (21) zu unterbrechen, wenn der zweite Füllstand erreicht oder überschritten ist.

8. Vorrichtung nach Anspruch 6 oder 7, wobei die Steuereinrichtung (30, 30a) dazu ausgelegt ist, im Füllmodus eine Verbindung des Wasserzulaufs (11) mit dem Wasseranschluss (21) zu unterbrechen und ein Alarmsignal auszugeben, wenn der zweite Füllstand erreicht oder überschritten ist.

9. Vorrichtung nach einem der vorhergehenden Ansprüche, wobei die Vorrichtung ferner eine ansteuerbare Ablasseinrichtung, vorzugsweise eine Entleerungspumpe, zum Ablassen von Flüssigkeit aus dem Wassertank (10) aufweist.

10. Vorrichtung nach Anspruch 9, wobei die Steuereinrichtung (30, 30a) ferner dazu ausgelegt ist, die Ablasseinrichtung in Abhängigkeit von dem Signal des mindestens einen Füllstandsensor (41, 42) und dem mindestens einen Betriebsmodus kontinuierlich oder intervallweise anzusteuern.

11. Vorrichtung nach einem der Ansprüche 1-10, mit einem von der Steuereinrichtung (30, 30a) ansteuerbaren Ventil (20), welches dazu ausgebildet ist, eine Fluidverbindung zwischen dem Wasserzulauf (11) und dem Wasseranschluss (21) herzustellen und/oder eine Fluidverbindung zwischen dem Wasserzulauf (11) und dem Wasseranschluss (21) zu trennen.

12. Vorrichtung nach einem der vorhergehenden Ansprüche, wobei der mindestens eine Füllstandssensor (41, 42) zusätzlich dazu ausgelegt ist, bei einer Benetzung mit Flüssigkeit im Wasserbehälter eine Behälterwasserhärte zu bestimmen und eine Information über die Behälterwasserhärte mittels des einen Signals an die Steuereinrichtung (30, 30a) zu übermitteln,
mit einem Auslass (15) zum Auslassen einer Flüssigkeit aus dem Wasserbehälter (10) und mit einem Filter (80) zum Deionisieren oder Entkalken einer aus dem Wasserbehälter (10) durch den Auslass (15) ausgelassenen Flüssigkeit.

13. Vorrichtung nach Anspruch 12, mit einem zusätzlichen Wasserhärtesensor (43), welcher am Auslass (15) angeordnet ist und dazu ausgelegt ist, bei einer Benetzung mit der durch den Auslass (15) ausgelassenen Flüssigkeit eine Auslasswasserhärte zu bestimmen.

14. Vorrichtung nach Anspruch 13, mit einer Steuerelektronik (30a),
wobei der zusätzliche Wasserhärtesensor (43) dazu ausgebildet ist, eine Information über die Auslasswasserhärte mittels eines Signals an die Steuerelektronik (30a) zu übertragen,
wobei die einer Steuerelektronik (30a) dazu ausgebildet ist, die Information über die Auslasswasserhärte mit der Information über die Behälterwasserhärte zu vergleichen und ein Signal bereitzustellen, falls die Differenz zwischen der Behälterwasserhärte und der Auslasswasserhärte kleiner oder gleich einem vorgegebenen Wert ist.

15. Kombination aus einer Vorrichtung nach Anspruch 14 und einem Getränkeautomaten (110),
wobei der Getränkeautomat eine Wasserleitung (45) umfasst, welche an den Auslass (15) des Wasserbehälters (10) angeschlossen ist, sodass die aus dem Auslass (15) ausgelassene Flüssigkeit in die Wasserleitung (45) fliessen kann,
wobei die Steuerelektronik (30a) ein Bestandteil des Getränkeautomaten (110) ist und zum Steuern eines Betriebs des Getränkeautomaten (110) ausgebildet ist.

16. Verfahren zum Reinigen des Wassertanks (10) einer Vorrichtung (100) nach einem der vorhergehenden Ansprüche, wobei das Verfahren die folgenden Verfahrensschritte aufweist:
- Aktivieren des Füllmodus und Befüllen des Wassertanks (10) bis zu einem ersten Füllstand;
- Zugeben von Reinigungsmittel, vorzugsweise Entkalkungsmittel, in den Wassertank (10);
- Aktivieren des Entleerungsmodus und Entleeren des Wassertanks (10);
- Aktivieren des Spülmodus und Befüllen des Wassertanks (10) bis zum zweiten Füllstand;
- Aktivieren des Entleerungsmodus und Entleeren des Wassertanks (10);
- Aktivieren des Füllmodus und Befüllen des Wassertanks (10) bis zum ersten Füllstand;
- Aktivieren des Entleerungsmodus und Entleeren, vorzugsweise intervallweises Entleeren, des Wassertanks (10).

17. Verwendung einer Vorrichtung nach einem der Ansprüche 1 bis 14 zum Bereitstellen von Flüssigkeit in einer Kaffeemaschine, vorzugsweise in einem Kaffeeautomaten.
